# EUROPEAN PATENT APPLICATION

(11) **EP 1 550 537 A1**
(43) Date of publication of application: **06.07.2005**
(21) Application number: 04258194.2
(22) Date of filing: 31.12.2004
(51) Int. Cl.: B29B 17/00, B29B 17/02, B29B 9/06, B29B 9/10, B29B 9/12, C08J 11/06

(54) **Method for processing polyvinyl butyral resin and method for reusing laminated glass**

(30) Priority: 05.01.2004 JP 2004000394
(71) Applicant: FUJI JUKOGYO KABUSHIKI KAISHA, Tokyo 160-8316 (JP); Toakagakukogyo, Co., Ltd., Tokyo 176-0021 (JP)
(72) Inventor: Kita, Masakazu, Fuji Jukogyo Kabushiki Kaisha, Tokyo 160-8316 (JP); Sudo, Yoshiro, Toakagakukogyo, Co., Ltd., Tokyo 176-0021 (JP)
(74) Representative: W.P. Thompson & Co.

(57) **Abstract**

A method for molding a polyvinyl butyral resin, including: kneading and granulating a polyvinyl butyral resin with a filler; and molding into a molded product by melting a mixture of the polyvinyl butyral resin and the filler, wherein the mixture being obtained in the step of kneading and granulating.

## Description

### CROSS-REFERENCE TO RELATED APPLICATION

This application claims priority to Japanese Patent Application No. 2004-000394 filed on January 5, 2004 which is incorporated herein by reference in its entirety.

### BACKGROUND OF THE INVENTION

### Field of the Invention

The present invention relates to a molding method for molding a molded product from a polyvinyl butyral resin, a processing method for processing a polyvinyl butyral resin and a reusing method for reusing a laminated glass.

### Description of Related Art

A laminated glass, which is formed by jointing glasses to two sides of an interlayer which is formed with a polyvinyl butyral resin, is used as front glass of an automobile, security window glass of a building or a house, solar panel, or the like. While partial wasted laminated glass is reused, almost all the wasted laminated glass is processed by being landed as the shredder dust.

In order to use the resources effectively, the laminated glass is separated into an interlayer and a piece of glass, the separated and collected interlayer is dissolved in an organic solvent such as ethanol, and fine glass fragments are separated from the polyvinyl butyral resin solution (refer to JP-Tokukai-2003-285042). Furthermore, the polyvinyl butyral resin is re-produced by evaporating the organic solvent from the polyvinyl butyral resin solution where fine glass fragments are removed (refer to JP-Tokukai-2003-285042).

With the above mentioned method for re-producing the polyvinyl butyral resin by using an organic solvent, a large amount of organic solvent is required, and furthermore, equipment for re-producing the polyvinyl butyral resin from the organic solvent is also required, causing a long time and a high cost for re-producing the polyvinyl butyral resin, which causes the method to be no more advantageous than producing new polyvinyl butyral resin.

### SUMMARY OF THE INVENTION

In order to overcome the above mentioned problems, an object of the present invention is accordingly to make it possible to reuse the polyvinyl butyral resin with low cost and short time.

In order to achieve the above object, in accordance with a first aspect of the present invention, there is provided a method for molding a polyvinyl butyral resin, comprising: kneading and granulating a polyvinyl butyral resin with a filler; and molding into a molded product by melting a mixture of the polyvinyl butyral resin and the filler, wherein the mixture being obtained in the step of kneading and granulating.

According to the first aspect of the present invention, the polyvinyl butyral resin and the filler are kneaded and granulated, it is possible to render the polyvinyl butyral resin which shows softness and tackiness, moldable. Therefore, it is possible to melt a mixture of the polyvinyl butyral resin and the filler, which is obtained in the step of kneading and granulating, and to mold into a molded product, it is possible to reuse the polyvinyl butyral resin as a molded product.

Preferably, the filler is at least one of a paper, a vegetable fiber, a glass fiber, a carbon, a talc, and an inorganic material.

According to the method using such a filler, since the filler is at least one of a paper, a vegetable fiber, a glass fiber, a carbon, a talc, and an inorganic material, the filler functions as a coagulating core member, it is possible to render the the polyvinyl butyral resin moldable.

Preferably, in the step of molding, one of an olefin resin and a thermoplastic resin is added to the mixture of the polyvinyl butyral resin and the filler, and the mixture is melted.

According to the method including such a step, since one of an olefin resin and a thermoplastic resin is added to the mixture of the polyvinyl butyral resin and the filler, it enables the melt index of the mixture of the polyvinyl butyral resin and the filler to be raised.

Preferably, the method for molding a polyvinyl butyral resin further comprises a step of pulverizing a PVB fragment which has a polyvinyl butyral resin contained therein, with a filler, before the step of kneading and granulating, and the mixture of the polyvinyl butyral resin and the filler, which is obtained in the step of pulverizing, is kneaded and granulated in the step of kneading and granulating.

According to such a method, since the PVB fragment having the polyvinyl butyral resin contained therein is pulverized with the filler before the step of kneading and granulating, it becomes easy to knead and granulate the polyvinyl butyral resin with the filler in the step of kneading and granulating.

Preferably, water is added to the polyvinyl butyral resin in the step of pulverizing.

According to such a method, since water is added to the polyvinyl butyral resin in the pulverizing step, it is possible to prevent the polyvinyl butyral resin from bunching up together. The addition of water further makes it possible to accelerate the separation, and to prevent the separated glass pieces from scattering in the case where the glass pieces are adhered to the polyvinyl butyral resin.

Preferably, a polyvinyl butyral resin interlayer separated and collected from a laminated glass, which comprises two glass plates and the interlayer interposed between the two glass plates, is pulverized as the PVB fragment in the pulverizing step.

According to such a method, since the interlayer separated and collected from the laminated glass is pulverized, and the PVB fragments of the interlayer, together with the filler, are pulverized, and kneaded and granulated, and the molded product is molded from the kneaded and granulated fragments, it is possible to reuse the interlayer of the laminated glass as the molded product.

In accordance with a second aspect of the present invention, there is provided a method for processing a polyvinyl butyral resin, wherein the polyvinyl butyral resin is kneaded and granulated with a filler.

According to the second aspect of the invention, since the polyvinyl butyral resin is kneaded and granulated with a filler, it is possible to render the polyvinyl butyral resin which shows softness and tackiness, moldable.

In accordance with a third aspect of the present invention, there is provided a method for reusing a laminated glass including two glass plates and a polyvinyl butyral resin interlayer interposed between the two glass plates, the method comprising: separating by extracting the interlayer from the laminated glass; pulverizing the extracted interlayer in the step of separating with a filler; kneading and granulating a mixture of the filler and the polyvinyl butyral resin, which is obtained in the step of pulverizing; and molding into a molded product by melting the mixture of the filler and the polyvinyl butyral resin, which is obtained in the step of kneading and granulating.

According to the third aspect of the invention, since the interlayer separated and collected from the laminated glass is pulverized, and the PVB fragments of the interlayer, together with the filler, are pulverized, and kneaded and granulated, and the molded product is molded from the kneaded and granulated fragments, it is possible to reuse the interlayer of the laminated glass as a molded product.

### BRIEF DESCRIPTION OF THE DRAWINGS

By way of example only, a specific embodiment of the present invention will now be described with reference to the accompanying drawings, in which:-
FIG. 1 is a flow chart which illustrates the flow of the molding method of the polyvinyl butyral resin in accordance with the embodiment in the present invention;
FIG. 2 is a cross sectional plan view of a piece of a laminated glass 1;
FIG. 3 is a cross sectional plan view of a pulverizing machine 5; and
FIG. 4 is a cross sectional plan view of a granulating machine 11.

### DETAILED DESCRIPTION OF THE PREFERRED EMBODIMENTS

An embodiment of the present invention will be explained hereinbelow referring to the drawings.

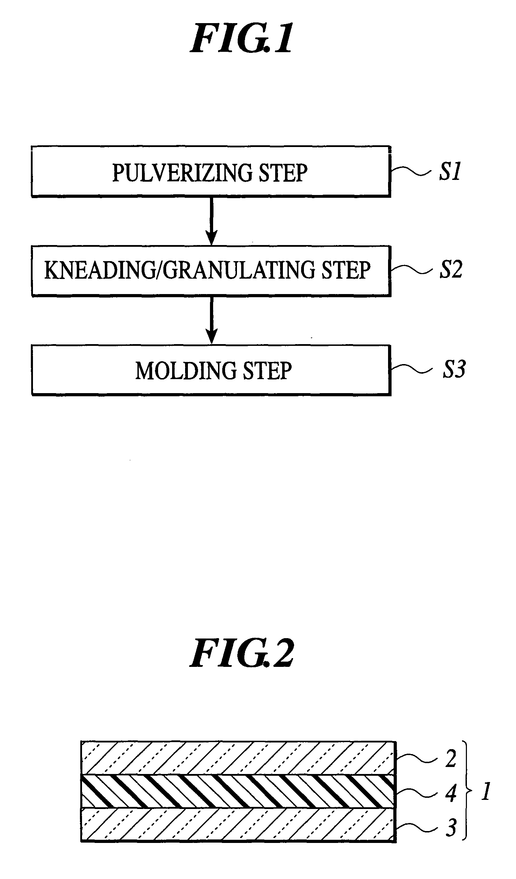

FIG. 1 illustrates the processing order of the molding method of polyvinyl butyral resin in accordance with an embodiment of the present invention.

The molding method in the present embodiment is a method for molding a molded product from collected polyvinyl butyral resin (PVB). As shown in FIG. 1, the molding method comprises: pulverizing a PVB fragment containing polyvinyl butyral resin with a fragment of filler (step S1); kneading and granulating a mixture of the pulverized mixture of the filler and the polyvinyl butyral resin obtained in the step S1 to obtain a pellet which contains the filler and the polyvinyl butyral resin (step S2); and molding a molded product by melting the kneaded and granulated pellet to mold into a molded product (step S3).

The PVB fragment is collected from the laminated glass 1 as shown in FIG. 2. The laminated glass 1 is used as front glass of an automobile, security window glass of a building or a house, solar panel, and the like. FIG. 2 is the cross sectional plan view of the laminated glass 1 which includes two glass plates 2 and 3, a polyvinyl butyral resin interlayer 4 which is interposed between the glass plates 2 and 3. The molding method of the present embodiment is used with the reusing method of such laminated glass in that the PVB fragment of the interlayer 4, which is obtained by being separated and collected from the laminated glass 1, is reused as the molded product.

In addition, a method may be used to separate and collect the interlayer 4 from the laminated glass 1, wherein the interlayer 4 is extracted by sieving with a sieve the pulverized fragments which are pulverized by pulverizing the laminated glass 1 which has been put into a cylindrical casing with a metal hammer rotating at a high speed. Here, the sieve may be forcefully vibrated so as to effectively separate the interlayer 4 from the glass plates 2 and 3.

There is also another method to separate the interlayer 4 from the glass plates 2 and 3 by immersing the pulverized fragments into water without sieving. In the case where the pulverized fragments are immersed into water, the water where the pulverized fragments are immersed may be stirred with a stirrer. The interlayer 4 may be extracted by using a sieve which is forcefully vibrated after the pulverized fragments are vacuumed in a vacuum chamber while containing water.

There is another method to separate the interlayer 4 from the glass plates 2 and 3 by crushing the laminated glass 1 after the laminated glass 1 is frozen in advance so as to reduce the bonding power.

Also there is another method wherein the laminated glass 1 is immersed in a solution where the interlayer 4 is dissolved and the residual glass plates 2 and 3 are taken out.

There is another method wherein the laminated glass 1 is noncontact cracked by being exposed to infrared, the laminated glass 1 is immersed in a cooling fluid while being in a state where the amount of heat of the infrared remains in the laminated glass 1, the crushed fragments of the laminated glass 1 which is in a state where the interlayer 4 and the glass plates 2 and 3 are separated is produced by applying impulse to the laminated glass 1 in the cooling fluid by the injected high pressure fluid by the supersonic or by both the injected high pressure fluid and the supersonic, and the interlayer 4 is extracted from the crushed fragments of the laminated glass 1 by using a sieve.

In the step S1 of the pulverizing step, the PVB fragments of the interlayer 4 obtained by being separated and collected from the laminated glass 1 are pulverized with the fragments of the filler. It is allowable that the filler be a core material which renders the polyvinyl butyral resin moldable and has coagulating property. At least one of paper, vegetable fiber (for example kenaf), glass fiber, carbon, talc, and other inorganic materials is used as the filler. In the case where paper is used, it is preferable that the paper be defibrated in advance.

In the pulverizing step, if necessary, by spraying water to the polyvinyl butyral resin, it is possible to prevent the polyvinyl butyral resin from bunching up together. In addition, it is also allowable that the wetted PVB fragments be pulverized together with the filler. The finer the polyvinyl butyral resin and the filler are pulverized, the easier the later kneading/granulating step becomes.

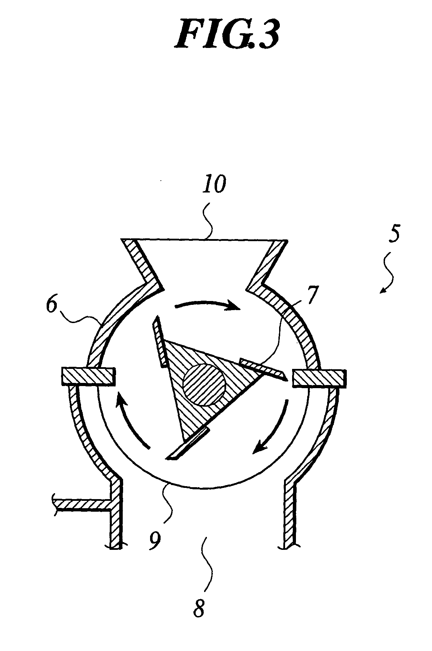

The pulverizing machine 5 as shown in FIG. 3 may be used in the pulverizing step. FIG. 3 is the cross section plan view of the pulverizing machine 5. The pulverizing machine 5 comprises: a cylindrical casing 6, a cutter 6 which rotates at a high speed in the casing 6, and a sieve 9 which covers up an outlet 8 formed at the bottom portion of the casing 6. When using the pulverizing machine 5, on loading the fragments of the filler (e.g. paper fragment) and the PVB fragments into the casing 6 from an inlet 10 formed at the top portion of the casing 6, the fragments of the filler and the PVB fragments are pulverized by the cutter 7, and the mixture of the fragments of the polyvinyl butyral resin and the filler is discharged from the outlet 8.

In the step S2 of the kneading and granulating step, the polyvinyl butyral resin is kneaded and granulated by being sawed to sufficiently crush the mixture of the fragments of the polyvinyl butyral resin and the filler.

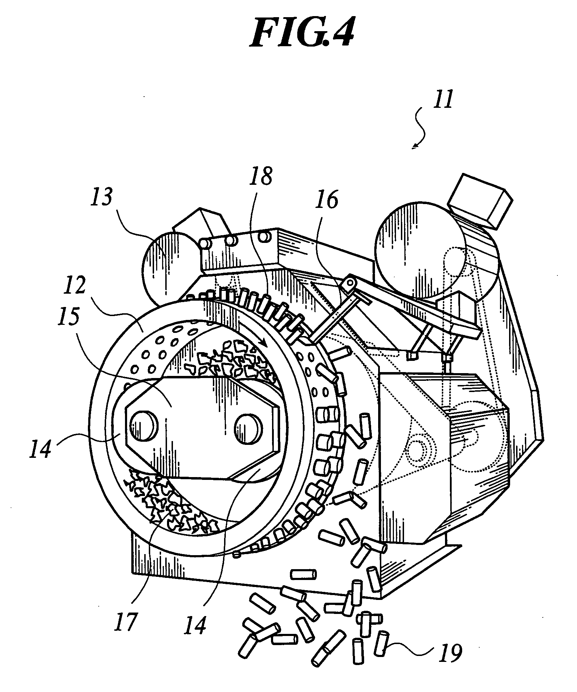

The granulating machine 11 as shown in FIG. 4 may be used in the step S2 of the kneading and granulating step. FIG. 4 is the cross section plan view of the granulating machine 11, which comprises: a cylindrical ring die 12 which can pivot on a central axle, a motor 13 which activates the ring die 12 to rotate, rotary rollers 14, 14 being brought into pressure contact with the inner peripheral surface of the ring die 12, a supporting member 15 which supports the rotary rollers 14, 14 so as to rotate freely, a cutter 16 which is disposed so as to confront the outer peripheral surface of the ring die 12. The ring die 12 is perforated with a plurality of openings that connect from the inner peripheral surface to the outer peripheral surface. When using the granulating machine 11, the mixture 17 of the polyvinyl butyral resin and the filler which is obtained in the pulverizing step is loaded in the ring die 12 and when the ring die 12 is activated to rotate by the motor 13, causing the mixture 17 to be crushed between the rotary rollers 14, 14 and the ring die 12. The crushed and kneaded and granulated mixture 18 is extruded out through the openings of the ring die 12 to the outer peripheral surface of the ring die 12, and the mixture which is extruded out is cut off by the cutter 16, making it possible to obtain a mixture pellet 19 of the polyvinyl butyral resin and the filler.

In the step S3 of the molding step, the mixture (e.g. the mixture pellet 19) of the polyvinyl butyral resin and the filler is heated to melt, molding a molded product. Here, the heating temperature for melting the mixture of the polyvinyl butyral resin and the filler is set to 160-230 [°C]. The molding method may be an injection molding method where an injection molding machine is used to inject the melted mixture of the polyvinyl butyral resin and the filler in a mold, or may be an extrusion molding method where an extruder is used to extrude the melted mixture of the polyvinyl butyral resin and the filler from a die.

When heating the mixture of the polyvinyl butyral resin and the filler to melt, adding an olefin resin or a thermoplastic resin to the mixture, makes it possible to raise the melt index (the amount of the thermoplastic material extruded in a fixed time period under a certain experimental condition), which allows the melted mixture of the polyvinyl butyral resin and the filler to be smoothly extruded or injected.

It is also allowable that a compatibilizer or a modifier be added to the mixture of the polyvinyl butyral resin and the filler corresponding to the application and moldability of the molded product.

As described above, according to the present embodiment, the polyvinyl butyral resin and the filler are kneaded and granulated, making it possible to render the the polyvinyl butyral resin which shows softness and tackiness, moldable. It is also possible to knead and granulate the mixture with resins which are easy to mold such as an olefin resin, a thermoplastic resin, or the like. Therefore, it is possible to reuse the collected polyvinyl butyral resin as the raw material of the molded product. Needless to say, the collected polyvinyl butyral resin can be used not only as the raw material of the injection molded product and the extrusion product, but also as the raw material of the sheet product, the calendar sheet and other plastic products. The collected polyvinyl butyral resin is not re-produced by using an organic solvent, and the polyvinyl butyral resin is reused as the molded product, making it possible to alleviate the time and cost used for the reuse of the polyvinyl butyral resin.

The combustion calorie of paper, which is used as the filler, is approximately 3500 [cal/g] which is lower than that (approximately 10000 [cal/g]) of general olefin resins such as PP (polypropylene), or the like. Therefore, the combustion calorie of the molded products made of polyvinyl butyral resin, paper and olefin resin is lower than the combustion calorie of the general olefin resins such as PP, or the like. In particular, it is possible to use the mixture of polyvinyl butyral resin and paper, which has less than 50% of polyvinyl butyral resin and more than 50% of paper contained thereof, as recyclable paper, which further makes it possible to alleviate the load to the environment.

### Example:

Hereinbelow, the present invention is explained specifically by using an example.

First, the collected PVB fragments are mixed with paper fragments, and the mixture is pulverized by using a pulverizing machine so that the longest portion of the fragments is less than 3 [mm], in case of fiber, the mixture is sufficiently crushed so that the length is approximately 1 [ mm] and the diameter is approximately 10 [ µm]. When pulverizing, water is added so that the PVB fragments become moist, making it possible to prevent the polyvinyl butyral resin from bunching up together. The PVB fragments are wet, making it possible to separate the glass pieces adhered to the polyvinyl butyral resin, and to prevent the separated glass pieces from scattering.

In this way, the pulverized fragments are repeatedly crushed under ambient temperature (room-temperature), the kneaded and granulated fragments of the polyvinyl butyral resin and the paper are extruded from the ring die (metallic mesh), and are converted into pellet shapes. The pellets are loaded together with the general olefin resin into the injection molding machine, and are heated to 160-230 [°C] and injected into a mold, and each material is uniformed scattered without separating, making it possible to obtain a compatible molded product. In addition, it has been confirmed that there is no problem to mold when the polyvinyl butyral resin is loaded until 33% (weight percentage).

According to the invention, the polyvinyl butyral resin is kneaded and granulated together with the filler, and the molded product is molded from the mixture, making it possible to reuse the polyvinyl butyral resin without an organic solvent such as ethanol and without equipment for evaporating the organic solvent. Therefore, it is possible to alleviate the cost used for reusing the polyvinyl butyral resin.

Furthermore, the polyvinyl butyral resin is not dissolved in the organic solvent, making it possible to alleviate the time used for reusing the polyvinyl butyral resin.

Although the invention has been explained according to the embodiments, it should also be understood that the invention is not limited to the embodiments and that various changes and modifications may be made to the invention from the gist thereof.

## Claims

1. A method for molding a polyvinyl butyral resin, comprising:
kneading and granulating a polyvinyl butyral resin with a filler; and
molding into a molded product by melting a mixture of the polyvinyl butyral resin and the filler,
wherein the mixture being obtained in the step of kneading and granulating.

2. The method for molding a polyvinyl butyral resin as claimed in claim 1, wherein the method further comprises a step of pulverizing a PVB fragment which has a polyvinyl butyral resin contained therein, with a filler, before the step of kneading and granulating, and the mixture of the polyvinyl butyral resin and the filler, which is obtained in the step of pulverizing, is kneaded and granulated in the step of kneading and granulating.

3. The method for molding a polyvinyl butyral resin as claimed in claim 1, wherein the filler is at least one of a paper, a vegetable fiber, a glass fiber, a carbon, a talc, and an inorganic material.

4. The method for molding a polyvinyl butyral resin as claimed in claim 2, wherein the filler is at least one of a paper, a vegetable fiber, a glass fiber, a carbon, a talc, and an inorganic material.

5. The method for molding a polyvinyl butyral resin as claimed in claim 1, wherein in the step of molding, one of an olefin resin and a thermoplastic resin is added to the mixture of the polyvinyl butyral resin and the filler, and the mixture is melted.

6. The method for molding a polyvinyl butyral resin as claimed in claim 2, wherein in the step of molding, one of an olefin resin and a thermoplastic resin is added to the mixture of the polyvinyl butyral resin and the filler, and the mixture is melted.

7. The method for molding a polyvinyl butyral resin as claimed in claim 3, wherein in the step of molding, one of an olefin resin and a thermoplastic resin is added to the mixture of the polyvinyl butyral resin and the filler, and the mixture is melted.

8. The method for molding a polyvinyl butyral resin as claimed in claim 2, wherein water is added to the polyvinyl butyral resin in the step of pulverizing.

9. The method for molding a polyvinyl butyral resin as claimed in claim 4, wherein water is added to the polyvinyl butyral resin in the step of pulverizing.

10. The method for molding a polyvinyl butyral resin as claimed in claim 6, wherein water is added to the polyvinyl butyral resin in the step of pulverizing.

11. The method for molding a polyvinyl butyral resin as claimed in claim 2, wherein a polyvinyl butyral resin interlayer separated and collected from a laminated glass which comprises two glass plates and the interlayer interposed between the two glass plates, is pulverized as the PVB fragment in the step of pulverizing.

12. The method for molding a polyvinyl butyral resin as claimed in claim 4, wherein a polyvinyl butyral resin interlayer separated and collected from a laminated glass which comprises two glass plates and the interlayer interposed between the two glass plates, is pulverized as the PVB fragment in the step of pulverizing.

13. The method for molding a polyvinyl butyral resin as claimed in claim 6, wherein a polyvinyl butyral resin interlayer separated and collected from a laminated glass which comprises two glass plates and the interlayer interposed between the two glass plates, is pulverized as the PVB fragment in the step of pulverizing.

14. The method for molding a polyvinyl butyral resin as claimed in claim 8, wherein a polyvinyl butyral resin interlayer separated and collected from a laminated glass which comprises two glass plates and the interlayer interposed between the two glass plates, is pulverized as the PVB fragment in the step of pulverizing.

15. The method for molding a polyvinyl butyral resin as claimed in claim 4, wherein in the step of molding, one of an olefin resin and a thermoplastic resin is added to the mixture of the polyvinyl butyral resin and the filler, and the mixture is melted.

16. The method for molding a polyvinyl butyral resin as claimed in claim 15, wherein water is added to the polyvinyl butyral resin in the step of pulverizing.

17. The method for molding a polyvinyl butyral resin as claimed in claim 16, wherein a polyvinyl butyral resin interlayer separated and collected from a laminated glass which comprises two glass plates and the interlayer interposed between the two glass plates, is pulverized as the PVB fragment in the step of pulverizing.

18. A method for processing a polyvinyl butyral resin, wherein the polyvinyl butyral resin is kneaded and granulated with a filler.

19. A method for reusing a laminated glass including two glass plates and a polyvinyl butyral resin interlayer interposed between the two glass plates, the method comprising:
separating by extracting the interlayer from the laminated glass;
pulverizing the extracted interlayer in the step of separating with a filler;
kneading and granulating a mixture of the filler and the polyvinyl butyral resin, which is obtained in the step of pulverizing; and
molding into a molded product by melting the mixture of the filler and the polyvinyl butyral resin, which is obtained in the step of kneading and granulating.
